# EUROPEAN PATENT APPLICATION

(11) **EP 0 898 886 A1**
(43) Date of publication of application: **03.03.1999**
(21) Application number: 97115003.2
(22) Date of filing: 29.08.1997
(51) Int. Cl.: A01M 1/02, A01M 1/20, A01M 1/24, E04B 1/72

(54) **System for the protection of buildings against termites**

(71) Applicant: RHONE-POULENC AGROCHIMIE, 69009 Lyon (FR)
(72) Inventor: The designation of the inventor has not yet been filed
(74) Representative: Bentham, Stephen

(57) **Abstract**

A system for the protection of buildings against termites using an insecticide container comprising a housing, insecticide positioned internally of the housing and an opening in the housing allowing entry of insects in use, but preventing contact during storage.

## Description

The invention is related to a technical system which is an attachable device and to a method for controlling termites, and for the reduction or elimination of a population of termites.

Many methods of eliminating termites, totally or partially, have already been proposed. Many insecticidal compounds have also been proposed for the same purpose. However, the termites remain an intractable problem.

An object of the invention is to provide an easy and efficient way or method to control termite populations.

Another object of the present invention is to provide an effective protection for buildings and housings against termites.

Another object of the invention is to provide a simple and cheap method to control termites.

Another object of the instant invention is to provide a new and potent means to reduce, or preferably destroy a population of termites which are already in a building.

Another object of the instant invention is to provide a new method which is able to control, reduce, or preferably destroy a population of termites which have a nest colony in an unknown location, inside or outside a building.

Another object of the instant invention is to provide a new method to control, reduce, or preferably destroy a population of termites which have an unlocated colony but their presence and activity are apparent in a building by their damage to timber in the building, by creating damaging orifices.

It has been found that these objects can be met by means of the instant invention.

The invention is thus related to a new protecting system of a building against termites which is an attachable device comprising a container containing a bait for termites and an insecticidally active ingredient, the said container having at least two preformed flaps which can be separated (optionally by cutting), the said flaps being able to be opened to let the container presenting a surface having a material impregnated with the said active ingredient, said surface being internal to the container when the flaps are closed or still preformed and not yet separated.

The invention is also directed to a method of protecting the timber materials of and in a building having locus / loci where termites are visibly circulating, said method using an attachable device which comprises an opened container having two flaps (according to the instant invention as here above described) which are flexible and able to be put together to close the container when isolated, said method further comprising the application of the said flaps in close contact to the said locus / loci where the termites are visibly circulating and the flaps are fixed (attached) to the area surrounding the said locus / loci so as to have the said container remaining applied to and adhering on the said locus / loci and creating a close covering upon the said locus / loci.

According to a particular feature of the invention, the attachable device is attached upon the orifices (visible manifestations of their damages) which have been previously made by the termites.

The invention further relates to a termite-damaged piece of timber or building having an attachable device attached to it, said attachable device being as previously described.

The locus / loci where the termites are visibly circulating may be galleries of said termites, that is to say apparent galleries or sheltertubes that they are making. It can be also locus / loci where the said termites are active and damaging timber-in-service, and have created orifices.

The bait is not limited to foodstuff and could include pheromones.

The present invention will be more clearly understood from the following description, given by way of example only, with reference to the accompanying drawings in which:
Figure 1 represents a bait tube container (attachable device) according to the present invention;
Figure 2 represents the bait tube (attachable device) of figure 1 just after application upon a shelter gallery.
Figure 3 represents the bait tube (attachable device) of figure 1 just before opening the flaps;
Figures 4 and 5 represent intermediate steps when making the bait tube (attachable device) of figures 1 and 2;
Figure 6 represents a bait tube container (attachable device) after being placed upon an active termite site;
Figure 7 represents a bait tube container (attachable device) after being placed upon a gallery or sheltertube made by termites;
Figure 8 represents how the bait tube of figure 7 is put in place upon the said termite gallery or sheltertube.
Figures 9 to 13 represent the manufacturing of a bait box (attachable device) according to the invention.
Figure 14 represents the bait box placed upon a termite gallery or sheltertube;
Figure 15 represents a bait tube container before being placed upon an active termite site;
Figure 16 represents a bait tube container after being placed upon a decayed or damaged place having orifices created by the termites;
Figure 17 represents how to connect a bait box to the bait tube so as to get the system of figure 18;
Figure 18 represents a particular embodiment of the invention whereby the bait tube is complemented by a bait box for high infestations; and
Figure 19 represents a bait tube container after being placed upon a decayed or damaged place having orifices created by the termites.

Some various possible embodiments of the invention are described hereafter, which are either possible or preferred. These embodiments are directed both to the protecting system as well as to the method of protecting.

According to a first embodiment, the container is a tube or a sheetup. It can be made of plastic or corrugated cardboard 4.

According to another embodiment, the container contains also wood, preferably wood blocks 6.

According to another embodiment, the container is wrapped around the wood or the wood blocks 6.

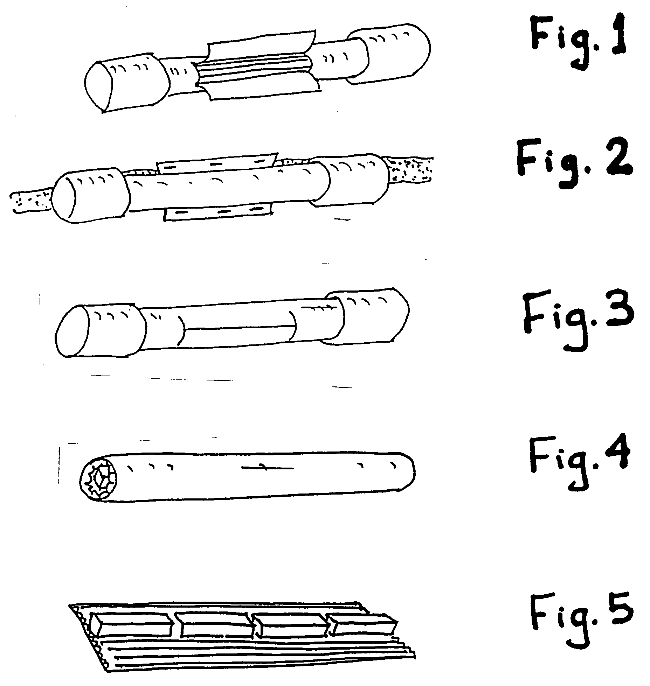

As illustrated in Figures 1 to 5, the container is preferably in the form of a cylinder of cardboard 4, preferably wrapped in plastic sheets or plastic tubing 8. The wrapping material is preferably black so as to be more convenient for termites. The ends of the cylinder are advantageously covered with a clear plastic covering 10, such as a vial, which may be useful to indicate the presence of termites without disturbing them. A practical consequence is that it is easy to see whether the termites are foraging and feeding on the bait or whether the bait container should be moved to a more active termite site.

According to another preferred embodiment of the invention, the container containing a bait is a box containing moisture or water, and preferably wood.

Figure 1 shows the container just before its application onto a shelter gallery of termites or a damaged place. The outer layers 4,8 are opened as flaps 12 to be held in place around the place of application. The general shape of a tube may be replaced by a general shape such as a disk. Then the preformed flaps may be present not on the round side of the cylinder, but on the flat side of the disk.

As shown in Figures 2 and 3 at the extremities of the tube are covering layers or caps 10.

The flaps 12 may be opened. They may be pre-existing, or just preformed, with some pre-indication or pre-mark or pre-incision or doted incision, so that the flaps 12 are easily detached or cut or separated in order to open the attachable device.

In the figure 3, the preforming of flaps 12 is in the shape of an " I ". However, the preforming may be in the shape of a " X " cross, or other shape. As a consequence, more then two flaps may be present in the attachable device of the invention. There might be 3, 4 or more flaps.

Figure 4 represents a cardboard roll (preferably corrugated cardboard roll) which is already filled with bait composition 6 and insecticidally active ingredient.

Figure 5 represents the cardboard 4 with attractive material 6, including wood, before rolling into a tube.

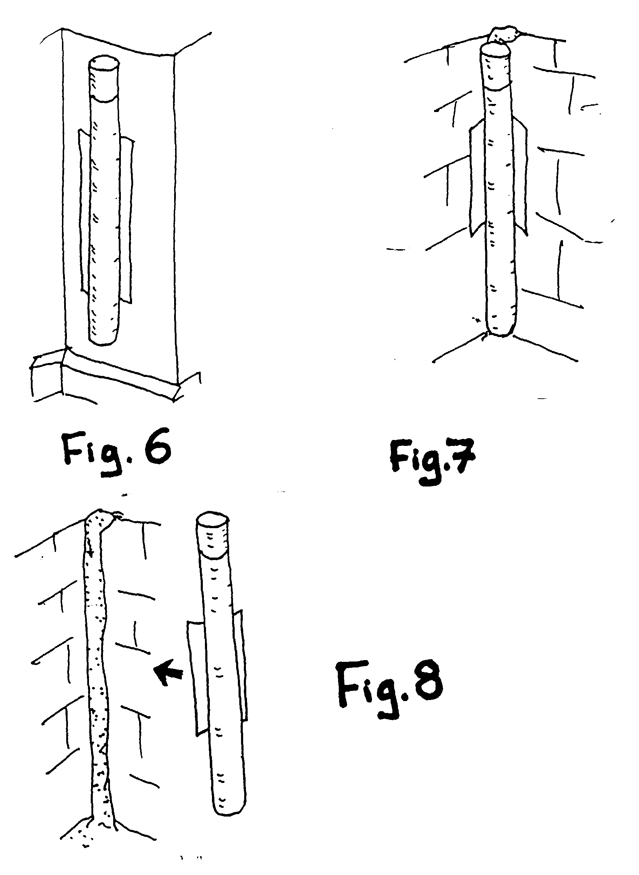

Figures 6 and 7 illustrate a container attached to a wall by means of its opened flaps 12 and Figure 8 illustrates the container of Figure 7 being attached. Thus the attachable device is an attached device.

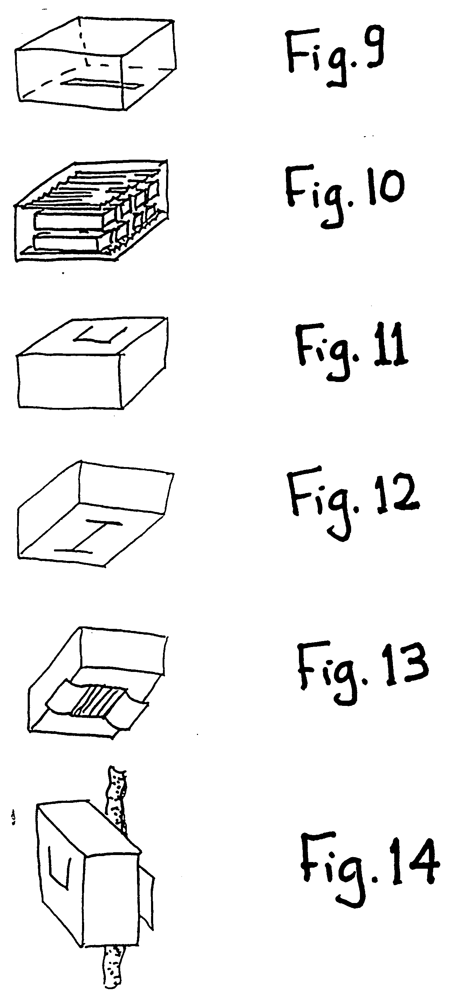

As mentioned above, the container need not be of cylindrical form, but could have any other shape. Figures 9 to 14 illustrate a substantially rectangular form of box container.

Figure 9 represents a slit 14 (for example 5 mm wide) in the base of a plastic box 16.

Figure 10 represents wood blocks 18 between cardboards and wrap in plastic sheeting. The wood is preferably impregnated or coated with an insecticidally active material and optionally with an attractant.

Figure 11 represents the wood blocks 18 as prepared in figure 10 put in the plastic box of figure 9. A U-section is cut for purpose of creating flap 20. This one flap is useful to view the termite activity.

Figure 12 is similar to figure 11 except that it shows an H-section cut so as to provide 2 flaps instead of one. The two flaps are used to hold in place the bait box over the active termite damage.

Figure 13 represents the opened bait box 16 as prepared in figures 9 to 12. The moist cardboard and the wood blocks 18 can be seen inside.

As with previous embodiments, the container 16 can be attached by means of its flaps 20. This is illustrated in Figure 14.

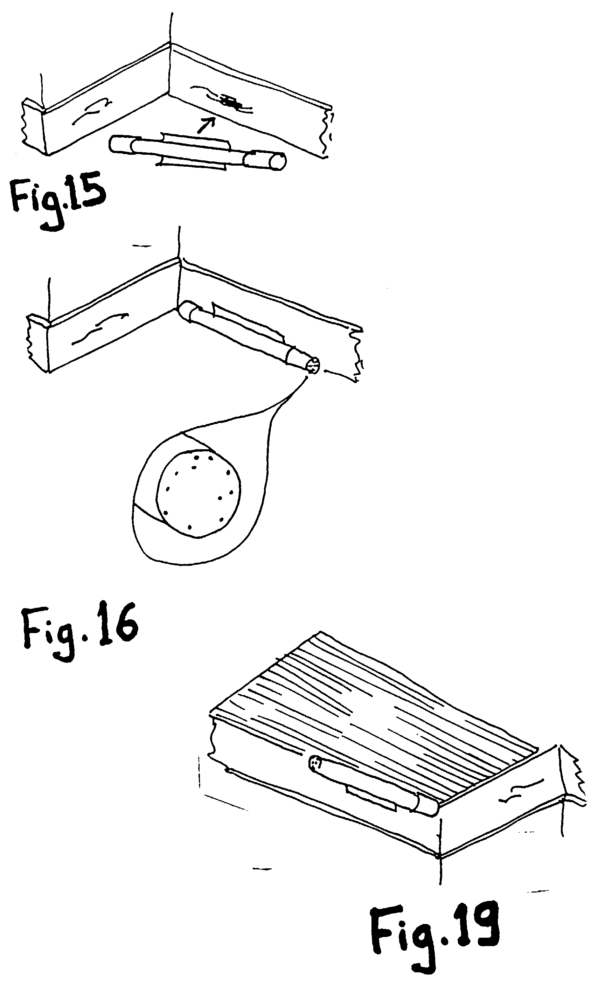

Figures 15 and 16 illustrate a container of the cylindrical type being fitted to a timber part of a building in which termites are already active. In particular, as illustrated in Figure 15, part of the wood has already been damaged by the termites to create a hole 22. As illustrated in Figure 16, the cylindrical container is fixed to the wood with its two flaps 12 such that its window is positioned over the damaged part of the wood.

The illustrated container has relatively thin white paper put as a covering layer 10 at the end of the tube.

Figure 16 shows the fecal deposits 24 of the termites on the white paper 10 put as covering layer at the end of the tube. These deposits indicate the presence of active termites.

Positioning of a tubular container is similarly illustrated in Figure 19.

For particular high infestations, it is possible to use a container according to the present invention in conjunction with a further container of insecticide.

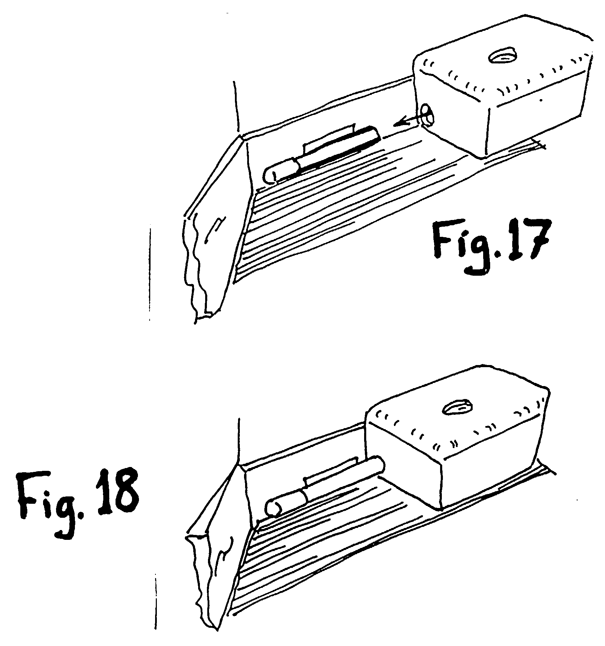

Figures 17 and 18 illustrate this embodied with a cylindrical container.

As illustrated, the container is attached with its flaps 12 to an infested area in the normal way, but one of its covering ends 10 is removed such that that end of the container may be inserted, or at least connected to, another container 26 of insecticide.

As illustrated, the other container 26 of insecticides is provided with a hole 28 to receive the end of the insecticide container. Furthermore, it contains larger quantities of insecticide so as to exterminate higher infestations.

Thus the attachable device of the invention may have various forms. It may have the form of a tube associated with a box. The tube is directing the termites towards the box where there is more space, more bait, more insecticide.

According to another preferred embodiment of the invention, the container contains a bait in which is incorporated an insecticide with delayed action.

Among the insecticides with delayed action, those having secondary killing properties are preferred.

By insecticide having a delayed action, it is meant an insecticide having no knock-down effect, that is to say an insecticide which kills insects within a period of time greater than 3 minutes after they have taken a lethal dose, preferably greater than 30 minutes.

Many insecticides with delayed action may be used in the invention. A family of insecticides which is particularly appropriate to the invention is the 1-substituted-phenyl pyrazoles which have also other appropriate substituents on this pyrazole ring. The 1-arylpyrazoles which can be used according to the instant invention are preferably compounds of formula (I) : 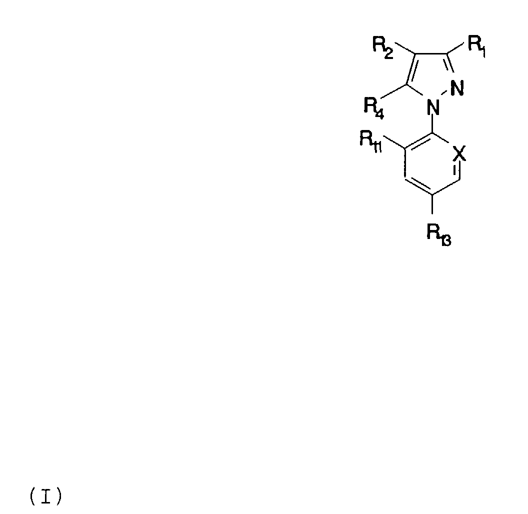 in which:
R₁ is CN or methyl or a halogen atom,
R₂ is S(O)ₙR₃ or 4,5-dicyanoimidazol 2-yl or haloalkyl ,
R₃ is alkyl or haloalkyl;
R₄ represents a hydrogen or halogen atom or a member of a group consisting of NR₅R₆, S(O)ₘR₇, C(O)R₇, C(O)O-R_{7,} alkyl, haloalkyl, OR₈ and -N=C(R₉)(R₁₀);
R₅ and R₆ independently represent the hydrogen atom or an alkyl, haloalkyl, C(O)alkyl, C(O)OR₇ or S(O)ᵣCF₃ radical; or R₅ and R₆ can together form a divalent alkylene radical which can be interrupted by one or two heteroatoms, such as oxygen, nitrogen or sulfur;
R₇ represents an alkyl or haloalkyl radical;
R₈ represents an alkyl or haloalkyl radical or a hydrogen atom;
R₉ represents an alkyl radical or a hydrogen atom;
R₁₀ represents a phenyl or heteroaryl group which may optionally be unsubstituted or substituted by one or more halogen, OH, -O-alkyl, -S-alkyl, cyano or alkyl or combinations thereof;
R₁₁ and R₁₂ represent, independently of one another, a hydrogen or halogen atom, or CN or NO₂,
R₁₃ represents a halogen atom or a haloalkyl, haloalkoxy, S(O)_{q}CF₃ or SF₅ group,
X represents a trivalent nitrogen atom or a C-R₁₂ radical, the other three valences of the carbon atom forming part of the aromatic ring,
m, n, q, and r represent, independently of one another, an integer equal to 0, 1, or 2,
provided that, when R₁ is methyl, then either R₃ is haloalkyl, R₄ is NH₂, R₁₁ is Cl, R₁₃ is CF₃ and X is N; or then R₂ is 4,5-dicyanoimidazol 2-yl, R₄ is Cl, R₁₁ is Cl, R₁₃ is CF₃, and X is =C-Cl.

The alkyl and alkoxy groups and moieties thereof of the formula (I) are preferably lower alkyl and alkoxy groups, that is, groups having one to six carbon atoms. The haloalkyl and haloalkoxy groups likewise preferably have one to four carbon atoms. The haloalkyl and haloalkoxy groups can bear one or more halogen atoms; preferred groups of this type include -CF₃ and -OCF₃. It shall be understood that the ring formed by the divalent alkylene radical represented by R₅ and R₆ and including the nitrogen atom to which R₅ and R₆ are attached is generally a 5, 6, or 7-membered ring. When R₁₀ is heteroaryl, it is preferably pyridyl, most preferably 2-pyridyl. It will be understood that the 1-arylpyrazoles of formula (I) include enantiomers and/or diastereomers thereof.

A preferred group of 1-arylpyrazoles for use in the present invention are those of formula (I) with one or more of the following features wherein:
R₁ is CN;
R₄ is -NR₅R₆;
R₅ and R₆ are independently selected from the hydrogen atom, alkyl, haloalkyl, C(O)alkyl, C(O)OR₇;
X is C-R₁₂; or
R₁₃ is selected from a halogen atom, haloalkyl, haloalkoxy, and -SF₅.

Another preferred group of 1-arylpyrazoles of formula (I) for use in the present invention is that wherein:
R₁ is CN;
R₃ is a haloalkyl radical;
R₄ is NH₂;
X is C-R₁₂;
R₁₁ and R₁₂ represent, independently of one another, a halogen atom; and
R₁₃ is a haloalkyl radical.

A most preferred compound is 5-amino-1-(2,6-dichloro 4-trifluoromethyl phenyl) 4-trifluoromethylsulfinyl-3-cyanopyrazole, hereafter designated as compound (A).

Compounds of formula (I) may be prepared according to known processes, for example as described in International Patent Publications WO 87/3781, 93/6089, and 94/21606 as well as in European Patent Applications 295117, 403300, 385809 or 679650, German Patent Publication 19511269 and United States Patents 5232940 and 5236938 or other process according to the knowledge of a man skilled in the art of chemical synthesis, which is deemed to include Chemical Abstracts and the literature referred to therein. Compositions comprising the compounds of formula (I) may also be prepared according to the teaching of the same prior art or similar publications.

The protecting method of the invention is advantageous because the protecting device is small and compact and there is no need to further damage termite infested timbers. Furthermore it provides a means to destroy the nest colony without knowing the exact location of the nest. Furthermore, according to the invention it is possible to get rid of the whole nest colony without searching for the nest colony and with virtually no increase in the damage created by the termite activity : it is not uncommon to have considerable damage created by the search for the presence of the nest of the termites.

The following example illustrates the use of the invention in practice, but it under no circumstances means that this example is deemed as limiting the invention to the particular described embodiments.

### Example

A corrugated cardboard cylinder, or tube, is impregnated with a liquid formulation of fiproles. The ends of the roll are covered by a clear, plastic vial with a white paper insert.

An incision is made along the tube, and two flaps are opened. The opened tube is thus applied to the orifices made by termites in a building.

The flaps hold the tube in position over the active termite galleries or sheltertubes.

Within days, faecal spots on the white papers indicate that the termites are foraging inside the bait tube.

The bait tube is removed when there are no longer any active termites observed.

## Claims

1. An insecticide container comprising:
a housing (2);
insecticide (6) positioned internally of the housing; and
an opening in the housing (2) allowing entry by insects in use, but preventing contact during storage.

2. An insecticide container according to claim 1 wherein the opening comprises a window having at least one preformed flap (12) for selectively covering and opening the window (8).

3. An insecticide container according to claim 2 wherein there are two oppositely facing flaps (12) which together cover the window.

4. An insecticide housing according to claim 2 or 3 wherein the inner surface of the at least one flap (12) is provided with an adhesive such that, with the flap folded back away from the window and the inner surface facing outwardly, the flap may be used to secure the container in position.

5. An insecticide container according to claim 2, 3 or 4 wherein the container is cylindrical and said at least one flap (12) extends around a section of the periphery of the cylinder.

6. An insecticide container according to any preceding claim further comprising:
a material (6) within the housing positioned adjacent the opening wherein the insecticide is impregnated in the material (6).

7. An insecticide container according to claim 6 wherein the material comprises one or more wooden blocks (6).

8. An insecticide container according to claim 6 or 7 wherein the housing (2) is wrapped around the material (6).

9. An insecticide container according to any preceding claim wherein the housing (2) contains bait (6).

10. An insecticide container according to any preceding claim wherein the housing (2) contains moisture.

11. An insecticide container according to any preceding claim wherein the housing (2) comprises cardboard (4).

12. An insecticide container according to claim 11 wherein the cardboard (4) is wrapped in plastic (8).

13. An insecticide container according to claim 12 wherein the plastic (8) is black.

14. An insecticide housing according to any preceding claim wherein at least one end of the container is formed from a clear plastics material (10) and/or has a thin paper insert to allow observation of activity within the container.

15. An insecticide container according to any preceding claim wherein the insecticide is a compound of formula (I): 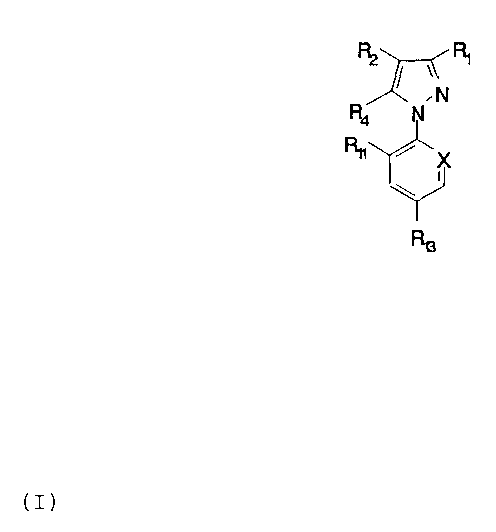 in which:
R₁ is CN or methyl or a halogen atom,
R₂ is S(O)ₙR₃ or 4,5-dicyanoimidazol 2-yl or haloalkyl ,
R₃ is alkyl or haloalkyl;
R₄ represents a hydrogen or halogen atom or a member of a group consisting of NR₅R₆, S(O)ₘR₇, C(O)R₇, C(O)O-R_{7,} alkyl, haloalkyl, OR₈ and -N=C(R₉)(R₁₀);
R₅ and R₆ independently represent the hydrogen atom or an alkyl, haloalkyl, C(O)alkyl, C(O)OR₇ or S(O)ᵣCF₃ radical; or R₅ and R₆ can together form a divalent alkylene radical which can be interrupted by one or two heteroatoms, such as oxygen, nitrogen or sulfur;
R₇ represents an alkyl or haloalkyl radical;
R₈ represents an alkyl or haloalkyl radical or a hydrogen atom;
R₉ represents an alkyl radical or a hydrogen atom;
R₁₀ represents a phenyl or heteroaryl group which may optionally be unsubstituted or substituted by one or more halogen,OH, -O-alkyl, -S-alkyl, cyano or alkyl or combinations thereof;
R₁₁ and R₁₂ represent, independently of one another, a hydrogen or halogen atom, or CN or NO₂,
R₁₃ represents a halogen atom or a haloalkyl, haloalkoxy, S(O)_{q}CF₃ or SF₅ group,
X represents a trivalent nitrogen atom or a C-R₁₂ radical, the other three valences of the carbon atom forming part of the aromatic ring,
m, n, q, and r represent, independently of one another, an integer equal to 0, 1, or 2,
provided that, when R₁ is methyl, then either R₃ is haloalkyl, R₄ is NH₂, R₁₁ is Cl, R₁₃ is CF₃ and X is N; or then R₂ is 4,5-dicyanoimidazol 2-yl, R₄ is Cl, R₁₁ is Cl, R₁₃ is CF₃, and X is =C-Cl.

16. An insecticide container according to any one of claims 1 to 14 wherein the insecticide is an insect growth regulator, preferably comprising a benzoylurea group.

17. A method of protecting timber where termites are circulating at a particular location using a container according to any preceding claim, the method comprising:
positioning the opening of the housing (2) so as to cover a particular location.

18. A method according to claim 17 comprising:
positioning the opening of the housing (2) so as to cover an orifice used or produced by termites.

19. A method of protecting timber according to claim 17 or 18 or using a container according to claim 2 or any one of claims 3 to 16 when appendant to claim 2, comprising:
opening said at least one flap (12); and
adhering the open window of the container on or near timber using said open flap (12).
